# EUROPÄISCHE PATENTSCHRIFT

(11) **EP 2 504 572 B1**
(45) Veröffentlichungstag und Bekanntmachung des Hinweises auf die Patenterteilung: **14.06.2017**
(21) Anmeldenummer: 10778930.7
(22) Anmeldetag: 01.11.2010
(51) Int. Cl.: F03D 7/02

(54) **ROTOR FÜR EINE WINDKRAFTANLAGE**
ROTOR FOR A WIND TURBINE
ROTOR POUR ÉOLIENNE

(30) Priorität: 26.11.2009 DE 102009044667
(43) Veröffentlichungstag der Anmeldung: 03.10.2012
(73) Patentinhaber: SSB Wind Systems GmbH & Co. KG, 48499 Salzbergen (DE)
(72) Erfinder: BERTOLOTTI, Fabio, 48455 Bad Bentheim (DE)
(86) Internationale Anmeldenummer: PCT/EP2010/066556
(87) Internationale Veröffentlichungsnummer: WO 2011/064070

(56) Entgegenhaltungen:
- EP-A1- 1 995 453
- DE-A1- 19 948 997
- DE-C1- 19 634 059

## Beschreibung

Die Erfindung betrifft einen Rotor für eine Windkraftanlage, mit einer Rotornabe, wenigstens einem an der Rotornabe um eine Blattachse drehbar gelagerten Rotorblatt und wenigstens einem Gewindespindel-Mechanismus, der zwischen die Rotornabe und das Rotorblatt geschaltet und sowohl mit der Rotornabe als auch mit dem Rotorblatt verbunden ist, welches durch Betätigen des Gewindespindel-Mechanismus relativ zu der Rotornabe um die Blattachse drehbar ist, der eine Spindelmutter, eine Gewindespindel und einen Antrieb aufweist.

Ein derartiger Rotor wird in den deutschen Patentanmeldungen 10 2008 055 473.1 und 10 2009 045 467.5 beschrieben. Bei bisherigen Konstruktionen weist der an der Rotornabe gelagerte Antrieb des Gewindespindel-Mechanismus einen relativ großen Abstand zu dem Rotorblatt auf, sodass der Zugang zu dem Antrieb für Servicepersonal beschwerlich ist.

Teilweise ist der Antrieb sogar außerhalb des Rotornabeninnenraums angeordnet, sodass neben einer weiteren Erschwerung der Zugänglichkeit auch noch Maßnahmen gegen Blitzeinschlag und andere meteorologische Einflüsse zu ergreifen sind. Ein Pitchverstellung gemäß dem Stand der Technik wird in der DE 199 48 997 A1 beschrieben. Ausgehend hiervon liegt der Erfindung die Aufgabe zugrunde, bei einem Rotor der eingangs genannten Art die Zugänglichkeit des Antriebs des Gewindespindel-Mechanismus zu verbessern.

Diese Aufgabe wird erfindungsgemäß mit einem Rotor nach Anspruch 1 gelöst. Bevorzugte Weiterbildungen der Erfindung sind in den Unteransprüchen gegeben.

Der erfindungsgemäße Rotor für eine Windkraftanlage umfasst eine Rotornabe, wenigstens ein an der Rotornabe um eine Blattachse drehbar gelagertes Rotorblatt und wenigstens einen Gewindespindel-Mechanismus, der zwischen die Rotornabe und das Rotorblatt geschaltet und sowohl mit der Rotornabe als auch mit dem Rotorblatt verbunden ist, welches durch Betätigen des Gewindespindel-Mechanismus relativ zu der Rotornabe um die Blattachse drehbar ist, der eine Spindelmutter, eine Gewindespindel und einen Antrieb aufweist, der im Bereich des Übergangs zwischen der Rotornabe und dem Rotorblatt an dem Rotorblatt gelagert und zusammen mit diesem um die Blattachse drehbar ist.

Durch die erfindungsgemäße Anordnung des Antriebs ist dieser für das Servicepersonal leicht zugänglich und einfach zu warten. Insbesondere ist der Antrieb im Handbereich der Rotornabe angeordnet, sodass er von einer sich in der Rotornabe aufhaltenden Serviceperson leicht per Hand erreichbar ist.

Die Spindelmutter ist insbesondere über eine Schraubverbindung mit der Gewindespindel verbunden. Bevorzugt ist die Spindelmutter auf die Gewindespindel aufgeschraubt.

Die Rotornabe umfasst insbesondere einen Innenraum. Ferner umfasst das Rotorblatt insbesondere einen Innenraum, der bevorzugt zu dem Innenraum der Rotornabe benachbart ist. Insbesondere schließt sich der Innenraum des Rotorblatts an den Innenraum der Rotornabe an. Vorzugsweise geht der Innenraum des Rotorblatts in den Innenraum der Rotornabe über.

Gemäß einer ersten Variante der Erfindung ragt der Antrieb in den Innenraum der Rotornabe hinein und/oder der Antrieb ist in dem Innenraum der Rotornabe angeordnet. Der Antrieb ist in diesem Fall besonders leicht zugänglich, nimmt aber auch Bauraum im Innern der Rotornabe in Anspruch. Gemäß einer zweiten Variante der Erfindung ragt der Antrieb in den Innenraum des Rotorblatts hinein und/oder der Antrieb ist in dem Innenraum des Rotorblatts angeordnet. Hierdurch ist der durch den Gewindespindel-Mechanismus im Innenraum der Rotornabe beanspruchte Bauraum reduzierbar. Ferner wird der Zugang zu dem Antrieb gegenüber der ersten Variante nur unwesentlich erschwert, sodass dessen Zugänglichkeit noch akzeptabel ist.

An dem der Rotornabe zugewandten Ende des Rotorblatts ist bevorzugt ein Wandelement befestigt, welches insbesondere zur Stabilisierung des Rotorblatts dient. Das Wandelement ist vorzugsweise stirnseitig an dem Rotorblatt angeordnet und trennt insbesondere den Innenraum des Rotorblatts von dem Innenraum der Rotornabe. Bevorzugt erstreckt sich das Wandelement quer zur Blattachse. Vorzugsweise durchquert oder überstreicht das Wandelement den Innenraum des Rotorblatts oder die der Rotornabe zugewandte Öffnung des Rotorblatts quer zur Blattachse, insbesondere vollständig oder zumindest teilweise. Ferner kann das Wandelement im Innenraum des Rotorblatts sitzen. Bevorzugt deckt das Wandelement den Innenraum des Rotorblatts ab, insbesondere vollständig oder zumindest teilweise. Das Wandelement ist vorzugsweise starr und/oder hinsichtlich einer Drehung um die Blattachse drehfest mit dem Rotorblatt verbunden, sodass es zusammen mit dem Rotorblatt um die Blattachse drehbar ist. Bevorzugt ist in dem Wandelement eine fensterartige Öffnung vorgesehen, durch welche hindurch der Innenraum des Rotorblatts vom Innenraum der Rotornabe her zugänglich ist. Gemäß einer Ausgestaltung der Erfindung ist der Antrieb an dem Wandelement gelagert.

Der Antrieb kann starr an dem Rotorblatt und/oder dem Wandelement festgelegt sein. Bevorzugt ist der Antrieb aber um eine blattseitige Schwenkachse schwenkbar an dem Rotorblatt und/oder dem Wandelement gelagert, die insbesondere in Richtung der Blattachse verläuft und vorzugsweise einen Abstand zu dieser aufweist. Somit ist der Gewindespindel-Mechanismus z.B. als Modul vorfertigbar und vorzugsweise als Ganzes montierbar.

Die Gewindespindel bildet zusammen mit der Spindelmutter bevorzugt eine Baugruppe. Gemäß einer Ausgestaltung der Erfindung ist die aus der Gewindespindel und der Spindelmutter gebildete Baugruppe an der Rotornabe um eine nabenseitige Schwenkachse schwenkbar gelagert, die insbesondere in Richtung der Blattachse verläuft und vorzugsweise einen Abstand zu dieser aufweist. Die Gewindespindel ist bevorzugt mit dem Antrieb gekoppelt und durch diesen um ihre Längsachse drehbar, wobei die Spindelmutter an der Rotornabe gelagert ist. Insbesondere ist die Spindelmutter an der Rotornabe um die nabenseitige Schwenkachse schwenkbar gelagert.

Gemäß einer Weiterbildung der Erfindung weist der Gewindespindel-Mechanismus ein mit der Spindelmutter gekoppeltes Betätigungsglied auf, mittels welchem die Spindelmutter an der Rotornabe gelagert ist. Insbesondere ist das Betätigungsglied an der Rotornabe um die nabenseitige Schwenkachse schwenkbar gelagert.

Gemäß einer Ausgestaltung der Erfindung ist die Gewindespindel lösbar mit dem Antrieb gekoppelt. Bevorzugt ist auch das Betätigungsglied lösbar mit der Spindelmutter gekoppelt. Somit ist die aus Gewindespindel und Spindelmutter gebildete Baugruppe von dem Gewindespindel-Mechanismus trennbar. Da diese Baugruppe einem erhöhten Verschleiß unterliegt, erleichtert deren Lösbarkeit die Wartung des Gewindespindel-Mechanismus. Insbesondere kann die Baugruppe ausgetauscht werden, ohne den gesamten Gewindespindel-Mechanismus demontieren zu müssen. Die Gewindespindel ist bevorzugt unter Zwischenschaltung einer Koppelwelle mit dem Antrieb gekoppelt, an der die Gewindespindel durch wenigstens ein Befestigungsmittel lösbar befestigt ist. Die Koppelwelle ist mit dem Antrieb gekoppelt und von diesem drehbar. Die Baugruppe ist vorzugsweise zwischen die Koppelwelle und das Betätigungsglied geschaltet.

Gemäß einer Weiterbildung der Erfindung weist der Gewindespindel-Mechanismus ein Getriebe auf, wobei die Gewindespindel mit dem Antrieb unter Zwischenschaltung des Getriebes gekoppelt ist. Die Gewindespindel ist insbesondere außerhalb des Antriebs angeordnet. Das Getriebe ist z.B. als Zahnradgetriebe, als Riementrieb oder als Planetengetriebe ausgebildet. Somit können herkömmliche Antriebe verwendet werden, sodass Kosten einsparbar sind. Gemäß einer Ausgestaltung der Erfindung ist das Getriebe zwischen den Antrieb und die Koppelwelle geschaltet. Ferner kann die Koppelwelle eine Abtriebswelle des Getriebes bilden. Bevorzugt ist der Antrieb über das Getriebe und/oder dessen Getriebegehäuse an dem Rotorblatt und/oder dem Wandelement gelagert.

Der Antrieb weist insbesondere eine Antriebswelle auf, die vorzugsweise direkt oder indirekt, z.B. über das Getriebe, mit der Gewindespindel gekoppelt ist, sodass durch eine Drehung der Antriebswelle um ihre Längsachse eine Drehung der Gewindespindel um ihre Längsachse herbeiführbar ist. Die Koppelwelle kann z.B. durch die Antriebswelle, durch die Abtriebswelle des Getriebes oder durch eine andere Welle gebildet sein, die zwischen die Gewindespindel und den Antrieb und/oder das Getriebe geschaltet ist. Bevorzugt umfasst der Antrieb wenigstens einen Motor mit einer Motorwelle, sodass die Antriebswelle insbesondere von der Motorwelle gebildet oder mit dieser gekoppelt ist. Der Antrieb ist insbesondere ein elektrischer Antrieb. Bevorzugt ist der Motor ein Elektromotor.

Der Antrieb ist zusammen mit dem Rotorblatt relativ zu der Rotornabe um die Blattachse drehbar. Diese Drehbarkeit muss bei der Installation von Verbindungsleitungen berücksichtigt werden, über welche der Antrieb versorgt wird. Dieser zusätzliche Aufwand wird durch die leichtere Zugänglichkeit des Antriebs und die damit verbundenen geringeren Wartungskosten aber mehr als aufgewogen. Im Falle eines elektrischen Antriebs handelt es sich bei den Verbindungsleitungen um elektrische Verbindungsleitungen, über welche der Antrieb mit elektrischem Strom versorgt wird. Gemäß einer ersten Alternative der Erfindung verläuft die mit der Gewindespindel gekoppelte Antriebswelle des Antriebs quer zur Längsachse der Gewindespindel. Bei dieser Anordnung kann der Antrieb in einigen Fällen relativ hohen gyroskopischen Belastungen ausgesetzt sein. Gemäß einer zweiten Alternative der Erfindung verläuft die mit der Gewindespindel gekoppelte Antriebswelle des Antriebs daher parallel zur Längsachse der Gewindespindel. Hierdurch ist der Gewindespindel-Mechanismus auf Seiten des Antriebs kompakter ausbildbar, sodass gyroskopische Belastungen des Antriebs reduzierbar sind.

Die Erfindung wird nachfolgend anhand bevorzugter Ausführungsformen unter Bezugnahme auf die Zeichnung beschrieben. In der Zeichnung zeigen:
- Fig. 1: eine schematische Darstellung einer Windkraftanlage mit einem Rotor gemäß einer ersten Ausführungsform der Erfindung,
- Fig. 2: eine Innenansicht der aus Fig. 1 ersichtlichen Rotornabe,
- Fig. 3: eine schematische und teilweise geschnittene Draufsicht auf einen der Blattwinkelverstellantriebe nach Fig. 2,
- Fig. 4: eine schematische Seitenansicht eines Teils des Blattwinkelverstellantriebs nach Fig. 3,
- Fig. 5: eine schematische und teilweise geschnittene Seitenansicht eines anderen Teils des Blattwinkelverstellantriebs nach Fig. 3,
- Fig. 6: eine schematische und teilweise geschnittene Darstellung des aus Fig. 3 ersichtlichen Getriebes,
- Fig. 7: eine schematische und teilweise geschnittene Darstellung eines Getriebes gemäß einer zweiten Ausführungsform der Erfindung und
- Fig. 8: eine schematische und teilweise geschnittene Seitenansicht eines Blattwinkelverstellantriebs gemäß einer dritten Ausführungsform der Erfindung.

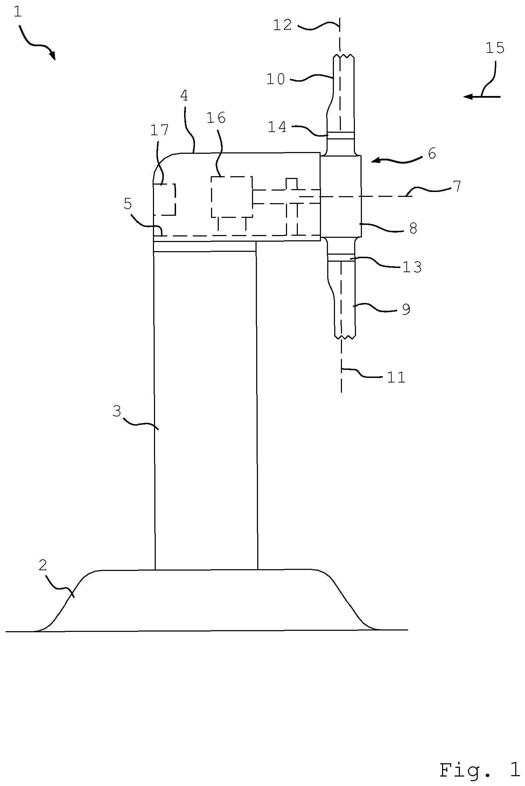

Aus Fig. 1 ist eine Windkraftanlage 1 ersichtlich, wobei ein von einem Fundament 2 aufstehender Turm 3 an seinem dem Fundament 2 abgewandten Ende mit einem Maschinenhaus 4 verbunden ist. Das Maschinenhaus 4 umfasst einen Maschinenträger 5, an dem ein Rotor 6 um eine Rotorachse 7 drehbar gelagert ist, der eine Rotornabe 8 und damit verbundene Rotorblätter 9 und 10 aufweist, die jeweils um ihre Blattachse 11 bzw. 12 relativ zur Rotornabe 8 drehbar sind. Die Rotorblätter 9 und 10 sind jeweils mit einem Blattwinkelverstellantrieb 13 bzw. 14 mechanisch gekoppelt, mittels welchem das jeweilige Rotorblatt um die zugehörige Blattachse gedreht werden kann. Der Rotor 6 ist durch Wind 15 um die Rotorachse 7 drehbar und ist mechanisch mit einem elektrischen Generator 16 gekoppelt, der an dem Maschinenträger 5 befestigt und insbesondere in dem Maschinenhaus 4 angeordnet ist. Für den kontrollierten Betrieb der Windkraftanlage 1 ist eine Windkraftanlagensteuerung 17 vorgesehen, mittels welcher unter anderem die Blattwinkelverstellantriebe 13 und 14 steuerbar sind. Obwohl lediglich zwei Rotorblätter dargestellt sind, kann der Rotor auch drei oder mehr Rotorblätter umfassen.

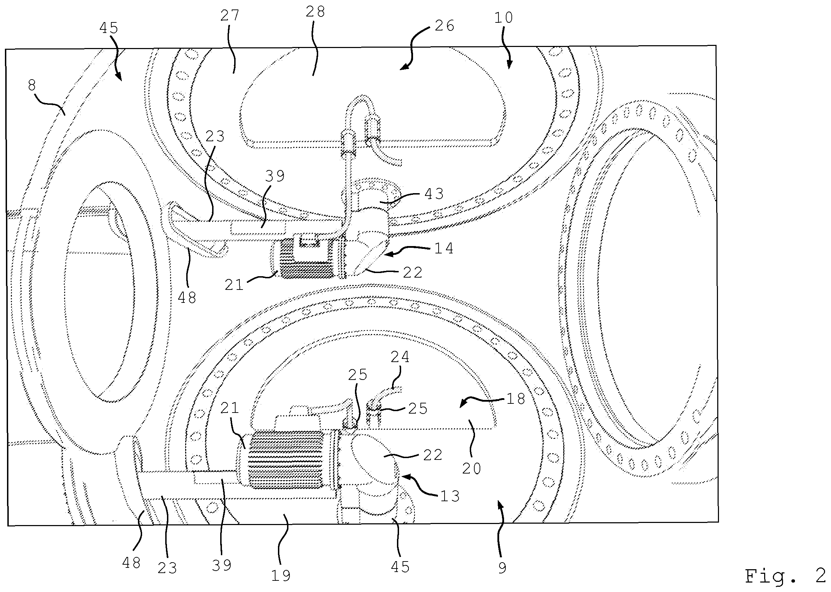

Aus Fig. 2 ist eine Innenansicht der Rotornabe 8 ersichtlich, wobei das Rotorblatt 9 einen Innenraum 18 aufweist und an seinem der Rotornabe 8 zugewandten Ende stirnseitig mit einem Wandelement 19 verschlossen ist. Das Wandelement 19 dient zur Stabilisierung des Rotorblatts 9 und trennt den Innenraum 18 des Rotorblatts 9 von dem Innenraum 45 der Rotornabe 8. Das Wandelement 19 ist mit einer fensterartigen Öffnung 20 versehen, durch welche hindurch der Innenraum 18 zugänglich ist. Der Blattwinkelverstellantrieb 13 greift an dem Wandelement 19 an und weist einen durch einen Elektromotor gebildeten Antrieb 21, ein Getriebe 22 und ein lineares Stellglied 23 auf, welches auf seiner dem Rotorblatt 9 abgewandten Seite an der Rotornabe 8 gelagert ist. Der Antrieb 21 ist mit elektrischen Verbindungsleitungen 24 verbunden und über diese mit elektrischem Strom versorgbar. Die Verbindungsleitungen 24 sind mittels Kabelhalterungen 25 derart in der Rotornabe 8 verlegt, dass sie einer Bewegung des Antriebs 21 relativ zu der Rotornabe 8 folgen können.

Das Rotorblatt 10 weist einen Innenraum 26 auf und ist an seinem der Rotornabe 8 zugewandten Ende stirnseitig durch ein Wandelement 27 verschlossen. Das Wandelement 27 dient zur Stabilisierung des Rotorblatts 10 und trennt den Innenraum 26 des Rotorblatts 10 von dem Innenraum 45 der Rotornabe 8. Ferner weist das Wandelement 27 eine fensterartige Öffnung 28 auf, durch welche hindurch der Innenraum 26 des Rotorblatts 10 von der Rotornabe 8 her zugänglich ist. An das Wandelement 27 greift der Blattwinkelverstellantrieb 14 an, der gleichartig zu dem Blattwinkelverstellantrieb 13 aufgebaut ist, sodass im Weiteren die Blattwinkelverstellantriebe anhand des Blattwinkelverstellantriebs 13 näher beschrieben werden.

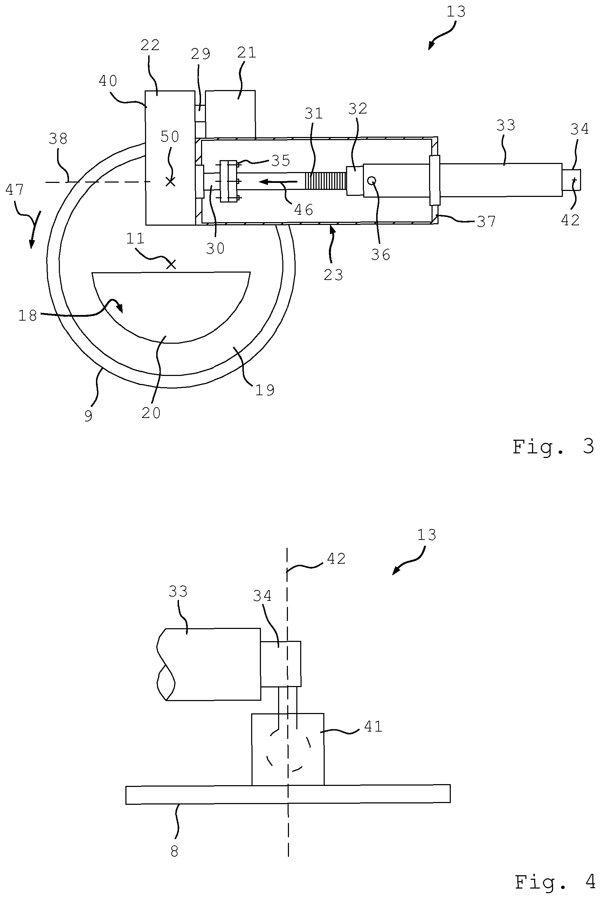

In Fig. 3 ist der Blattwinkelverstellantrieb 13 dargestellt, wobei der Motor 21 über seine Motorwelle 29 mit der Antriebsseite des Getriebes 22 gekoppelt ist, dessen Abtriebsseite mit einer Koppelwelle 30 gekoppelt ist. Die Koppelwelle 30 ist drehfest mit einer Gewindespindel 31 verbunden, auf der eine Spindelmutter 32 aufgeschraubt ist. Die Spindelmutter 32 ist fest mit einem Betätigungsglied 33 verbunden, welches an seinem der Spindelmutter 32 abgewandten Ende 34 schwenkbar an der Rotornabe 8 gelagert ist. Das lineare Stellglied 23 umfasst somit die Gewindespindel 31, die Spindelmutter 32 und das Betätigungsglied 33. Bevorzugt wird auch die Koppelwelle 30 dem Stellglied 23 zugerechnet.

Die Gewindespindel 31 ist über Befestigungsmittel 35, die hier als Schrauben ausgebildet sind, mit der Koppelwelle 30 lösbar verbunden. Ferner ist die Spindelmutter 32 über ein Befestigungsmittel 36, welches hier als Schraube ausgebildet ist, lösbar mit dem Betätigungsglied 33 verbunden. Die aus der Gewindespindel 31 und der Spindelmutter 32 gebildete Baugruppe kann somit ausgetauscht werden, ohne den gesamten Blattwinkelverstellantrieb 13 oder größere Teile davon demontieren zu müssen.

Die Gewindespindel 31 und die Spindelmutter 32 sind in einem Gehäuse 37 angeordnet, an welchem das Betätigungsglied 33 in Richtung der Längsachse 38 der Gewindespindel 31 verschiebbar geführt ist. Ferner ist die Koppelwelle 30 um die Längsachse 38 drehbar an dem Gehäuse 37 gelagert. Das insgesamt geschlossen ausgebildete Gehäuse 37 umfasst einen abnehmbaren Deckel 39 (siehe Fig. 2), mittels welchem eine Zugangsöffnung zum Innenraum des Gehäuses 37 freigebbar ist, sodass die aus der Gewindespindel 31 und der Spindelmutter 32 gebildete Baugruppe zugänglich ist. Das Gehäuse 37 wird insbesondere dem Stellglied 23 zugerechnet.

Der Blattwinkelverstellantrieb 13 ist als Gewindespindel-Mechanismus ausgebildet, der einerseits über das Ende 34 des Betätigungsglieds 33 an der Rotornabe 8 und andererseits über das Gehäuse 40 des Getriebes 22 an dem Wandelement 19 angelenkt ist. Durch eine Drehung der Gewindespindel 31 um ihre Längsachse 38 wird die Gewindespindel 31 in Richtung oder in Gegenrichtung des Pfeils 46 relativ zu dem Betätigungsglied 33 bewegt. Zusammen mit der Gewindespindel 31 bewegen sich dabei auch das Getriebe 22 und der Antrieb 21 in Richtung oder in Gegenrichtung des Pfeils 46. Da das Wandelement 19 drehfest mit dem Rotorblatt 9 verbunden ist, wird durch diese Bewegung das Rotorblatt 9 relativ zu der Rotornabe 8 um seine Blattachse 11 in Richtung oder in Gegenrichtung des Pfeils 47 gedreht.

Aus Fig. 4 ist eine teilweise Seitenansicht des Blattwinkelverstellantriebs 13 ersichtlich, wobei das Ende 34 des Betätigungsglieds 33 mittels eines Gelenks 41 an der Rotornabe 8 gelagert ist. Das Gelenk 41 ermöglicht eine Schwenkbewegung des Betätigungsglieds 33 um eine Schwenkachse 42, die parallel zur Blattachse 11 verläuft. Das Gelenk 41 ist z.B. als Drehgelenk, als Kreuzgelenk, als Kugelgelenk oder als Elastomerlager ausgebildet. Da das Stellglied 23 aufgrund seiner Länge die Wand der Rotornabe 8 durchgreift und außerhalb der Rotornabe 8 an dieser gelagert ist, weist die Wand der Rotornabe 8 einen Längsschlitz 48 (siehe Fig. 2) auf, durch welchen sich das Stellglied 23 hindurch erstreckt. Der Längsschlitz 48 ermöglicht ein Schwenken des Stellglieds 23 um die Schwenkachse 42.

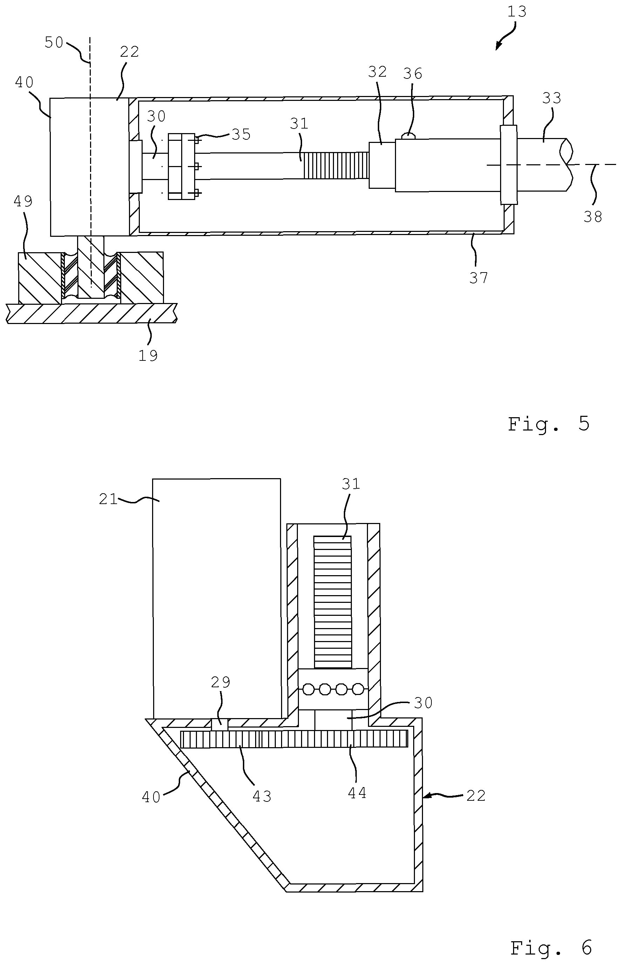

Aus Fig. 5 ist eine andere teilweise Seitenansicht des Blattwinkelverstellantriebs 13 ersichtlich, wobei das Gehäuse 40 des Getriebes 22 mittels eines Gelenks 49 um eine Schwenkachse 50 schwenkbar an dem Wandelement 19 gelagert ist. Die Schwenkachse 50 verläuft parallel zur Blattachse 11. Obwohl das Gelenk 49 hier ein Elastomerlager bildet, kann das Gelenk 49 auch als Drehgelenk, als Kreuzgelenk oder als Kugelgelenk ausgebildet sein.

Aus Fig. 6 ist eine teilweise geschnittene Ansicht des Getriebes 22 ersichtlich, wobei die Motorwelle 29 drehfest mit einem Zahnrad 43 verbunden ist, welches mit einem Zahnrad 44 kämmt, welches drehfest mit der Koppelwelle 30 verbunden ist. In diesem Fall verläuft die Motorwelle 29 parallel zur Koppelwelle 30 und zur Gewindespindel 31.

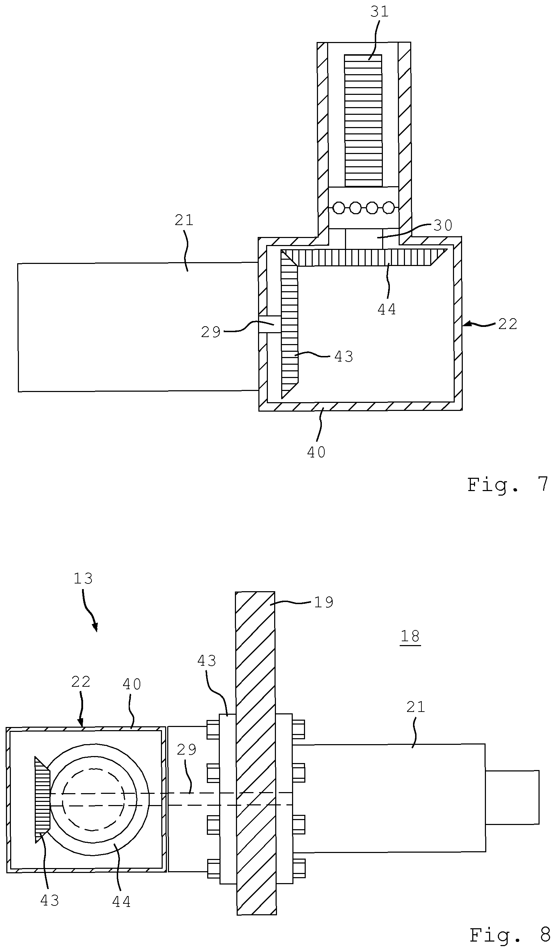

Aus den Fig. 7 und 8 sind weitere Ausführungsformen der Erfindung ersichtlich, wobei zu der ersten Ausführungsform identische oder ähnliche Merkmale mit denselben Bezugszeichen wie bei der ersten Ausführungsform bezeichnet sind.

Fig. 7 zeigt eine teilweise geschnittene Ansicht eines Getriebes 22 gemäß einer zweiten Ausführungsform der Erfindung, wobei die Motorwelle 29 senkrecht zur Koppelwelle 30 und zur Gewindespindel 31 verläuft, und wobei die beiden Zahnräder 43 und 44 jeweils als Kegelzahnrad ausgebildet sind. Durch diese Ausbildung des Getriebes 22 ergibt sich auch eine andere Anordnung des Elektromotors 21 relativ zum Stellglied 23. Abgesehen von diesen Unterschieden stimmt die zweite Ausführungsform aber im Wesentlichen mit der ersten Ausführungsform überein, sodass zur weiteren Beschreibung der zweiten Ausführungsform auf die Beschreibung der ersten Ausführungsform verwiesen wird.

Aus Fig. 8 ist in teilweise geschnittener Darstellung ein Blattwinkelverstellantrieb 13 gemäß einer dritten Ausführungsform der Erfindung ersichtlich, wobei das Getriebe 22 und der Antrieb 21 auf unterschiedlichen Seiten des Wandelements 19 angeordnet sind. Insbesondere sitzt der Antrieb 21 im Innenraum 18 des Rotorblatts 9. Abgesehen von diesen Unterschieden stimmt die dritte Ausführungsform aber im Wesentlichen mit der zweiten Ausführungsform überein, sodass zur weiteren Beschreibung der dritten Ausführungsform auf die Beschreibung der vorherigen Ausführungsformen verwiesen wird.

### Bezugszeichenliste

1 Windkraftanlage
2 Fundament
3 Turm
4 Maschinenhaus
5 Maschinenträger
6 Rotor
7 Rotorachse
8 Rotornabe
9 Rotorblatt
10 Rotorblatt
11 Blattachse
12 Blattachse
13 Blattwinkelverstellantrieb
14 Blattwinkelverstellantrieb
15 Wind
16 elektrischer Generator
17 Windkraftanlagensteuerung
18 Innenraum des Rotorblatts
19 Wandelement
20 fensterartige Öffnung
21 Antrieb / Elektromotor
22 Getriebe
23 lineares Stellglied
24 elektrische Verbindungsleitungen
25 Halterung für Verbindungsleitungen
26 Innenraum des Rotorblatts
27 Wandelement
28 fensterartige Öffnung
29 Motorwelle
30 Koppelwelle
31 Gewindespindel
32 Spindelmutter
33 Betätigungsglied
34 Ende des Betätigungsglieds
35 Befestigungsmittel / Schrauben
36 Befestigungsmittel / Schraube
37 Gehäuse
38 Längsachse der Gewindespindel
39 Deckel
40 Getriebegehäuse
41 Gelenk
42 Schwenkachse
43 Zahnrad
44 Zahnrad
45 Innenraum der Rotornabe
46 Pfeil, Bewegungsrichtung
47 Pfeil, Drehrichtung
48 Längsschlitz
49 Gelenk
50 Schwenkachse

## Patentansprüche

1. Rotor für eine Windkraftanlage, mit einer Rotornabe (8), wenigstens einem an der Rotornabe (8) um eine Blattachse (11) drehbar gelagerten Rotorblatt (9), wenigstens einem Gewindespindel-Mechanismus (13), der zwischen die Rotornabe (8) und das Rotorblatt (9) geschaltet und sowohl mit der Rotornabe (8) als auch mit dem Rotorblatt (9) verbunden ist, welches durch Betätigen des Gewindespindel-Mechanismus (13) relativ zu der Rotornabe (8) um die Blattachse (11) drehbar ist, der ein eine Spindelmutter (32) und eine Gewindespindel (31) umfassendes, lineares Stellglied (23) und einen Antrieb (21) aufweist, der im Bereich des Übergangs zwischen der Rotornabe (8) und dem Rotorblatt (9) an dem Rotorblatt (9) gelagert und zusammen mit diesem um die Blattachse (11) drehbar ist, wobei das lineare Stellglied (23) auf seiner dem Rotorblatt (9) abgewandten Seite an der Rotornabe (8) gelagert ist.

2. Rotor nach Anspruch 1,
**dadurch gekennzeichnet, dass**
der Antrieb (21) in den Innenraum (45) der Rotornabe (8) hineinragt oder in diesem angeordnet ist.

3. Rotor nach Anspruch 1,
**dadurch gekennzeichnet, dass**
der Antrieb (21) in den Innenraum (18) des Rotorblatts (9) hineinragt oder in diesem Innenraum angeordnet ist.

4. Rotor nach einem der vorangehenden Ansprüche,
**dadurch gekennzeichnet, dass**
an einem der Rotornabe (8) zugewandten Ende des Rotorblatts (9) ein Wandelement (19) befestigt ist, an dem der Antrieb (21) gelagert ist.

5. Rotor nach einem der vorangehenden Ansprüche,
**dadurch gekennzeichnet, dass**
der Antrieb (21) um eine in Richtung der Blattachse (11) verlaufende und zu dieser einen Abstand aufweisende Schwenkachse (50) schwenkbar an dem Rotorblatt (9) gelagert ist.

6. Rotor nach einem der vorangehenden Ansprüche,
**dadurch gekennzeichnet, dass**
eine aus der Gewindespindel (31) und der Spindelmutter (32) gebildete Baugruppe an der Rotornabe (8) um eine in Richtung der Blattachse (11) verlaufende und zu dieser einen Abstand aufweisende Schwenkachse (42) schwenkbar gelagert ist.

7. Rotor nach einem der vorangehenden Ansprüche,
**dadurch gekennzeichnet, dass**
die Gewindespindel (31) mit dem Antrieb (21) gekoppelt und durch diesen um ihre Längsachse (38) drehbar ist, wobei die Spindelmutter (32) an der Rotornabe (8) gelagert ist.

8. Rotor nach einem der vorangehenden Ansprüche,
**dadurch gekennzeichnet, dass**
das lineare Stellglied (23) ein fest mit der Spindelmutter (32) verbundenes Betätigungsglied (33) aufweist, welches an seinem der Spindelmutter (32) abgewandten Ende schwenkbar an der Rotornabe (8) gelagert ist.

9. Rotor nach Anspruch 8,
**dadurch gekennzeichnet, dass**
die Gewindespindel (31) lösbar mit dem Antrieb (21) gekoppelt ist, wobei das Betätigungsglied (33) lösbar mit der Spindelmutter (32) gekoppelt ist.

10. Rotor nach einem der vorangehenden Ansprüche,
**dadurch gekennzeichnet, dass**
der Gewindespindel-Mechanismus (13) ein Getriebe (22) aufweist, wobei die Gewindespindel (31) mit dem Antrieb (21) unter Zwischenschaltung des Getriebes (22) gekoppelt ist.

11. Rotor nach Anspruch 10,
**dadurch gekennzeichnet, dass**
eine mit der Gewindespindel (31) gekoppelte Antriebswelle (29) des Antriebs (21) quer zur Längsachse (38) der Gewindespindel (31) verläuft.

12. Rotor nach Anspruch 10,
**dadurch gekennzeichnet, dass**
eine mit der Gewindespindel (31) gekoppelte Antriebswelle (29) des Antriebs (21) parallel zur Längsachse (38) der Gewindespindel (31) verläuft.

13. Rotor nach einem der Ansprüche 10 bis 12,
**dadurch gekennzeichnet, dass**
der Antrieb (21) über das Getriebe (22) an dem Rotorblatt (9) gelagert ist.

14. Rotor nach einem der vorangehenden Ansprüche,
**dadurch gekennzeichnet, dass**
der Antrieb (21) ein elektrischer Antrieb ist.

15. Rotor nach einem der vorangehenden Ansprüche,
**dadurch gekennzeichnet, dass**
in Richtung der Längsachse (38) der Gewindespindel (31) das lineare Stellglied (23) sich über das Rotorblatt (9) hinaus erstreckt und im Abstand zu diesem an der Rotornabe (8) gelagert ist.

## Claims

1. A rotor for a wind turbine, comprising a rotor hub (8),at least one rotor blade(9) rotatable mounted to the rotor hub (8),at least one threaded spindle mechanism (13) interposed between said rotor hub (8) and the rotor blade (9) that is connected both to the rotor hub (8) and the rotor blade (9), which is rotatable relative to the rotor hub (8) around the blade axis (11)through actuation of the threaded spindle mechanism (13) which consists of a spindle nut (32) and a linear actuator (23) comprising a threaded spindle (31) and a drive (21) which is mounted to the rotor blade (9) in the area of the transition between the rotor hub (8) and the rotor blade (9) and is rotatable together with the latter around the blade axis (11), wherein the linear actuator (23) is mounted to the rotor hub (9) on the side facing away from the rotor blade(9).

2. The rotor according to claim 1, **characterised in that** the drive (21) projects into the interior (45) of the rotor hub (8) or is arranged in the latter.

3. The rotor according to claim 1, **characterized in that** the drive (21) projects into the interior (18) of the rotor blade (9) or is arranged in the latter.

4. The rotor according to one of the above claims, **characterised in that** a wall element (19), to which the drive (21) is mounted, is fastened to one end of the rotor blade (9) facing the rotor hub (8).

5. The rotor according to one of the above claims, **characterised in that** the drive (21) is mounted so as to be pivotable on the rotor blade (9) about a pivot axis (50) extending in the direction of the blade axis (11).

6. The rotor according to one of the above claims, **characterised in that** an assembly formed by the threaded spindle (31) and the spindle nut (32) is arranged on the rotor hub (8) about an axis of rotation (42) in the direction of the blade axis (11).

7. The rotor according to one of the above claims, **characterised in that** the threaded spindle (31) is coupled to the drive (21) and is rotatable therewith about its longitudinal axis (38), the spindle nut (32) being mounted on the rotor hub (8).

8. The rotor according to one of the above claims, **characterized in that** the linear actuator (23) has an actuating medium (33) which is firmly connected to the spindle nut (32) and which is pivotally mounted to its end (8) facing away from the spindle nut (32).

9. The rotor according to claim 8, **characterised in that** the threaded spindle (31) is removable coupled to the drive (21), the actuating medium (33) being removable coupled with the spindle nut (32).

10. The rotor according to one of the above claims, **characterised in that** the threaded spindle mechanism (13) comprises a gear (22), the threaded spindle (31) being coupled to the drive (21) whilst interposing the gear (22).

11. The rotor according to claim 10, **characterised in that** a drive shaft (29) of the drive (21), which is coupled to the threaded spindle (31), extends transversely to the longitudinal axis (38) of the threaded spindle (31).

12. The rotor according to claim 10,**characterised in that** a drive shaft (29) of the drive (21), which is coupled to the threaded spindle (31), extends parallel to the longitudinal axis (38) of the threaded spindle (31).

13. The rotor according to one of the claims 10 to 12, **characterised in that** the drive (21) is mounted on the rotor blade (9) via the gear (22).

14. The rotor according to one of the above claims, **characterised in that** the drive (21) is an electrical drive.

15. The rotor according to one of the above claims **characterised in that** in the direction of the longitudinal axis (38) of the threaded spindle (31) the linear actuator (23) extends beyond the rotor blade (9) and is mounted at a distance from the latter on the rotor hub (8).

## Revendications

1. Rotor pour une éolienne, comportant un moyeu de rotor (8), au moins une pale de rotor (9) montée sur le moyeu de rotor (8) de façon à pouvoir pivoter autour d'un axe de pale (11), au moins un mécanisme à broche filetée (13) mis en place entre le moyeu de rotor (8) et la pale de rotor (9) et relié tant au moyeu de rotor (8) qu'à la pale de rotor (9), laquelle peut, par actionnement du mécanisme à broche filetée (13), pivoter autour de l'axe de pale (11) par rapport au moyeu de rotor (8), ce mécanisme comportant un actionneur linéaire (23) comprenant un écrou de broche (32) et une broche filetée (31) ainsi qu'un entraînement (21) qui est monté sur la pale de rotor (9) dans la zone de transition entre le moyeu de rotor (8) et la pale de rotor (9) et peut pivoter avec celle-ci autour de l'axe de pale (11), l'actionneur linéaire (23) étant monté sur le moyeu de rotor (8) sur son côté opposé à la pale de rotor (9).

2. Rotor selon la revendication 1, **caractérisé en ce que** l'entraînement (21) avance à l'intérieur (45) du moyeu de rotor (8) ou est mis en place dans celui-ci.

3. Rotor selon la revendication 1, **caractérisé en ce que** l'entraînement (21) avance à l'intérieur (18) de la pale de rotor (9) ou est mis en place dans cet espace intérieur.

4. Rotor selon l'une des revendications précédentes, **caractérisé en ce qu'**un élément mural (19), sur lequel l'entraînement (21) est monté, est fixé à une extrémité de la pale de rotor (9) qui est orientée vers le moyeu de rotor (8).

5. Rotor selon l'une des revendications précédentes, **caractérisé en ce que** l'entraînement (21) est monté sur la pale de rotor (9) de façon à pouvoir pivoter autour d'un axe de rotation (50) dirigé vers l'axe de pale (11) et placé à distance de celui-ci.

6. Rotor selon l'une des revendications précédentes, **caractérisé en ce qu'**un module constitué de la broche filetée (31) et de l'écrou de broche (32) est monté sur le moyeu de rotor (8) de façon à pouvoir pivoter autour d'un axe pivotant (42) dirigé vers l'axe de pale (11) et placé à distance de celui-ci.

7. Rotor selon l'une des revendications précédentes, **caractérisé en ce que** la broche filetée (31) est couplée avec l'entraînement (21) et peut pivoter grâce à celui-ci autour de son axe longitudinal (38), l'écrou de broche (32) étant monté sur le moyeu de rotor (8).

8. Rotor selon l'une des revendications précédentes, **caractérisé en ce que** l'actionneur linéaire (23) comprend un organe d'actionnement (33) relié fermement à l'écrou de broche (32) et monté, à son extrémité opposée à l'écrou de broche (32), sur le moyeu de rotor (8) de façon à pouvoir pivoter.

9. Rotor selon la revendication 8, **caractérisé en ce que** le broche filetée (31) est couplée de manière amovible avec l'entraînement (21), l'organe d'actionnement (33) étant couplée de manière amovible avec l'écrou de broche (32).

10. Rotor selon l'une des revendications précédentes, **caractérisé en ce que** le mécanisme de la broche filetée (13) comprend un engrenage (22), la broche filetée (31) étant couplée avec l'entraînement (21) par l'intermédiaire de l'engrenage (22).

11. Rotor selon la revendication 10, **caractérisé en ce qu'**un arbre moteur (29) de l'entraînement (21) couplé avec la broche filetée (31) est perpendiculaire à l'axe longitudinal (38) de la broche filetée (31).

12. Rotor selon la revendication 10, **caractérisé en ce qu'**un arbre moteur (29) de l'entraînement (21) couplé avec la broche filetée (31) est parallèle à l'axe longitudinal (38) de la broche filetée (31).

13. Rotor selon l'une des revendications 10 à 12, **caractérisé en ce que** l'entraînement (21) est monté sur la pale de rotor (9) par l'intermédiaire de l'engrenage (22).

14. Rotor selon l'une des revendications précédentes, **caractérisé en ce que** l'entraînement (21) est un entraînement électrique.

15. Rotor selon l'une des revendications précédentes, **caractérisé en ce que**, dans la direction de l'axe longitudinal (38) de la broche filetée (31), l'actionneur linéaire (23) se prolonge au-delà de la pale de rotor (9) et est monté sur le moyeu de rotor (8) à distance de celle-ci.
